Europäisches Patentamt

European Patent Office

Office européen des brevets

(19)

(11) Veröffentlichungsnummer: **0 303 567 B1**

(12)  # EUROPÄISCHE PATENTSCHRIFT

(45) Veröffentlichungstag der Patentschrift :
13.11.91 Patentblatt 91/46

(51) Int. Cl.⁵ : **A21C 3/06**

(21) Anmeldenummer : 88810497.3

(22) Anmeldetag : 20.07.88

(54) Verfahren zum Aufhaspeln eines Teigbandes auf eine Teighaspel, sowie Teilgauswalzmaschine mit einer Teigband-Aufhaspelvorrichtung.

(30) Priorität : 29.07.87 DE 3725090

(43) Veröffentlichungstag der Anmeldung :
15.02.89 Patentblatt 89/07

(45) Bekanntmachung des Hinweises auf die
Patenterteilung :
13.11.91 Patentblatt 91/46

(84) Benannte Vertragsstaaten :
DE ES FR IT

(56) Entgegenhaltungen :
EP-A- 0 238 682
DE-A- 2 718 383

(73) Patentinhaber : SEEWER AG
Heimiswilstrasse 42
CH-3400 Burgdorf (CH)

(72) Erfinder : Siegenthaler, Peter
Kaufdorfstrasse 36
CH-3125 Toffen (CH)

(74) Vertreter : Tschudi, Lorenz et al
Bovard AG Patentanwälte VSP
Optingenstrasse 16
CH-3000 Bern 25 (CH)

# Beschreibung

Die vorliegende Erfindung bezieht sich auf ein Verfahren zum Aufhaspeln eines Teigbandes auf eine Teigband-Haspel gemäss dem Patentanspruch 1, eine Teigauswalzmaschine mit einer Teigband-Aufhaspelvorrichtung gemäss dem Oberbegriff des Patentanspruches 4 sowie auf eine Teigband-Aufhaspelvorrichtung für eine Teigauswalzmaschine gemäss dem Oberbegriff des Patentanspruches 7.

Aus der DE-PS 2718383 ist eine Teigband-Haspel an einem Teigwalzwerk vorbekannt, das mit zwei dies- bzw. jenseits eines Walzenpaares angeordneten, je ein Gestell, zwei Rollen und ein Förderband aufweisenden Förderern ausgerüstet ist, wobei am Gestell des einen der genannten Förderer ein Chassis mit Seitenplatten befestigt ist, die in Querrichtung aufeinander ausgerichtete, oben offene Aussparungen für Achsteile einer Haspel besitzen, wobei ein von diesem einen Förderer ausgehend mit grösserer Geschwindigkeit angetriebenes, zur Uebernahme eines darauf abgegebenen Teigbandes bestimmtes Förderband vorhanden ist, dessen beide Trume an einer unterhalb der Haspel ihr gegenüberliegend angeordneten, an den Seitenplatten ortsfest gelagerten Stützrolle gestützt sind, und dass ferner eine Umlenkrolle umläuft, die an einem etwa unterhalb der Stützrolle an den Seitenplatten gelagerten Schwenksupport so angeordnet ist, dass, wenn dieser in eine Bereitschaftslage heraufgeschwenkt ist, das obere Trum ausgehend von der Stelle, an der es zwischen der Stützrolle und der Haspel durchläuft, die Haspel auf etwa einem Viertel ihres Umfanges umschlingt, um das Aufhaspeln eines darauf liegenden Teigbandes einzuleiten, und einen am Schwenksupport gelagerten Tast- und Verriegelungsarm, der in der Bereitschaftslage des Schwenksupportes a) mit einem an der benachbarten Seitenplatte befestigten Rastglied zusammenarbeitet, um den Schwenksupport in der Bereitschaftslage zu halten und b) die Höhenlage der Haspel abtastet, um dann, wenn diese eine vorbestimmte Anzahl von Teigbandlagen aufgenommen hat, sich vom Rastglied zu lösen und so den Schwenksupport freizugeben, der dann aus der Bereitschaftslage zurückschwenkbar ist, damit das weitere Aufhaspeln des Teigbandes auf der nach oben wandernden Haspel unbehindert erfolgen kann.

Diese bekannte Teigband-Aufhaspelvorrichtung weist den Nachteil auf, dass erstens der Schwenksupport manuell von einer Ruhelage in eine Bereitschaftslage gebracht werden muss. Im weiteren wird beim Aufhaspeln von dicken Teigbändern, beispielsweise zwischen 4 und 10 mm, der Ausklinkwinkel erreicht, bevor die erste Windung vollendet ist, oder aber der schlagartig wachsende Platzbedarf zum Blockieren der Teighaspel führt. Beim Aufwickeln von dünnen Teigbändern zwischen etwa 1 bis 4 mm sind bei Erreichen des Ausklinkwinkels bereits zuviele Windungen auf der Teighaspel vorhanden. Die Windungen liegen dann zu straff aufeinander, wodurch der Teig zum Zusammenkleben neigt, was Probleme beim Abhaspeln des Teigbandes ergibt.

Es ist deshalb eine Aufgabe der vorliegenden Erfindung, ein Verfahren zum Aufhaspeln eines Teigbandes auf eine Teighaspel, eine Teigauswalzmaschine mit einer Teigband-Aufhaspelvorrichtung sowie eine Teigband-Aufhaspelvorrichtung zu schaffen, welches Verfahren und welche Vorrichtungen die Nachteile des obgenannten Standes der Technik nicht aufweisen. Beim Aufhaspeln von dicken Teigbändern soll nach etwa einer Umdrehung der Schwenksupport automatisch weggeschwenkt werden, um den nötigen Raum zum Aufwickeln des dicken Teigbandes auf die Teighaspel zu schaffen. Beim Aufhaspeln von dünnen Teigbändern soll der Schwenksupport nach etwa zwei Umdrehungen wegschwenken, wodurch das Teigband ohne Behinderung aufgehaspelt werden kann, und die Windungen nicht wie bei der bekannten Vorrichtung zu straff aufeinander liegen.

Dies wird erfindungsgemäss beim Verfahren dadurch erzielt, dass nach dem letzten Auswalzdurchgang des Teigbandes zwischen den Teigwalzen dieser Durchgang von einem Abtastmittel erfasst wird, und das Teigband anschliessend durch einen Förderer einem Förderband einer Teigband-Aufhaspelvorrichtung zugeführt und auf einer Teighaspel aufgewickelt wird, wobei nach dem Erfassen des letzten Auswalzdurchganges des Teigbandes durch die Abtastmittel eine mit einem Schwenksupport verbundene Umlenkrolle von einer Ruhelage in einer Bereitschaftslage verschwenkt wird, und nach einer einstellbaren Verzögerungszeit, die beim Erfassen des letzten Auswalzdurchganges durch die Abtastmittel zu laufen beginnt, die mit dem Schwenksupport verbundene Umlenkrolle von der Bereitschaftslage in die Ruhelage verschwenkt wird, wobei in der Bereitschaftslage das Förderband das Teigband an die Teighaspel andrückt.

Bei der Teigauswalzmaschine wird die Aufgabe erfindungsgemäss durch die kennzeichnenden Merkmale des Patentanspruches 4 gelöst.

Bei der Teigband-Aufhaspelvorrichtung wird die Aufgabe erfindungsgemäss durch die kennzeichnenden Merkmale des Patentanspruches 7 gelöst.

Bevorzugte Ausführungsbeispiele der Erfindung ergeben sich aus den abhängigen Patentansprüchen. Im Folgenden wird anhand der beiliegenden Zeichnung ein Ausführungsbeispiel der Erfindung sowie dessen Verwendung näher beschrieben. Es zeigen :

Fig. 1 eine Seitenansicht einer bekannten Teigwalzmaschine mit der Teigband-Aufhaspelvorrichtung,

Fig. 2 eine Seitenansicht der Teigband-Aufhaspelvorrichtung gemäss dem Ausführungsbeispiel der Erfindung, wobei sich ein Schwenksupport in der Bereitschaftslage A befindet,

Fig. 3 eine Ansicht der Teigband-Aufhaspelvorrichtung gemäss Fig. 2, wobei sich der Schwenksupport in der Ruhelage B befindet

Fig. 4 einen Schnitt gemäss Linie IV-IV der Fig. 2,

Fig. 5 einen Schnitt gemäss Linie V-V der Fig. 2,

Fig. 6 einen Schnitt gemäss Linie VI-VI der Fig. 2,

Fig. 7 und 8 den Aufwickelvorgang auf die Teigbandhaspel für einen sehr dicken resp. sehr dünnen Teig.

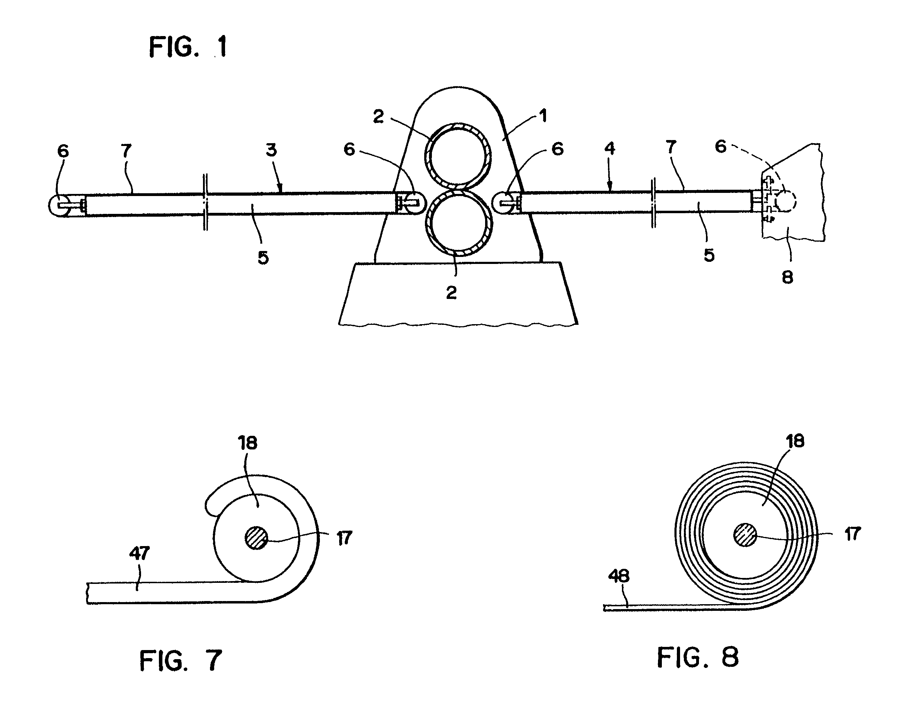

In der Fig. 1 ist mit 1 ein Gehäuse eines Teigwalzwerkes bekannter Bauart bezeichnet, zu dem ein Paar übereinander angeordneter Walzen 2 und zwei dies- bzw. jenseits dieses Walzenpaares angeordneter Förderer 3 bzw. 4 gehören. Diese Förderer weisen je ein Gestell 5, zwei Rollen 6 und ein Förderband 7 auf. Am rechten Ende des Förderers 4 gemäss Fig. 1 ist die Teigband-Aufhaspelvorrichtung 8 schematisch dargestellt.

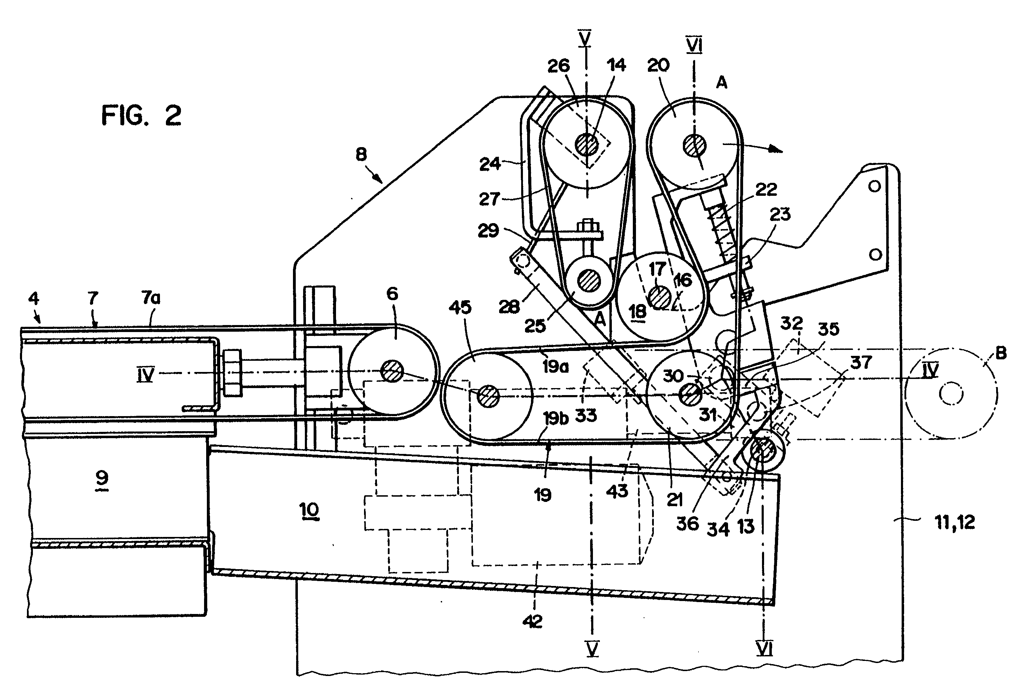

In Fig. 2 ist die Teigband-Aufhaspelvorrichtung im Detail in Seitenansicht dargestellt. Die Teigband-Aufhaspelvorrichtung 8 ist innerhalb zweier Seitenplatten 11 und 12 angeordnet, welche durch eine Querverstrebung 13 starr miteinander verbunden sind und von einem Chassis 9, 10, welches am Gestell 5 befestigt ist, getragen werden. Die Seitenplatten 11 und 12 besitzen je eine oben offene Aussparung 16 zur Aufnahme der Achse 17 einer Teighaspel 18.

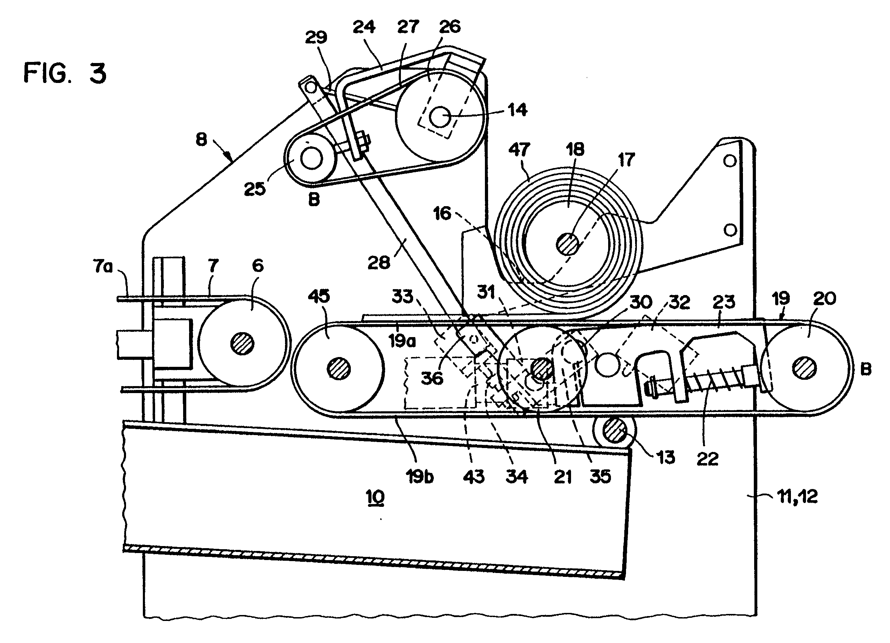

Die Teigband-Aufhaspelvorrichtung 8 weist ein eigenes Förderband 19 auf, das eine zu ihrem Antrieb dienende Antriebsrolle 45 sowie eine leer mitlaufende Umlenkrolle 20 und eine Stützrolle 21 umläuft. Das Förderband 19 umläuft ebenfalls die Teighaspel 18 auf einem Teil ihres Umfanges und versetzt dieselbe in Rotation. Im Gegensatz zur Vorrichtung gemäss dem eingangs erwähnten Stand der Technik, sind die oberen Trume 7a und 19a der Förderbänder 7 und 19 in der Höhe nicht mehr so stark gegeneinander versetzt. Dies erweist sich insbesondere bei der Herstellung von dicken Teigbändern als vorteilhaft. Die Antriebsrolle 45 wird durch die Rolle 6 am Ende des Teigförderbandes 7 angetrieben. Die Umlenkrolle 20 ist mittels Spannfedern 22 auf Schwenksupporten 23 gefedert gehalten. Ein Förderband 27 liegt in der Bereitschaftslage A an der Teighaspel 18 an und gewährleistet, dass das Teigband die Teighaspel 18 umschlingt. Die Rolle 26 wird ebenfalls von der Rolle 6 am Ende des Förderbandes 7 angetrieben. Die Verlängerung 36 vom Schwenksupport 23 ist mit einer Schubstange 28 gelenkig mit dem Federstab 29 verbunden. Auf der Achse 14 sind der Federstab 29 und die Halterung 24 befestigt. Wird also die Rolle 20 von der Bereitschaftsstellung A in die Ruhelage B geschwenkt, so schwenkt auch die Rolle 25 von der Bereitschaftsstellung A in die Ruhelage B (Fig. 3). Die Bereitschaftsstellung A wird durch einen Endschalter 32 kontrolliert. Die Ruhelage B wird durch einen Endschalter 33 erfasst, wobei eine am Hebel 35 vorgesehene Schraube 34 mit dem Endschalter 33 in Berührung gelangt. Das Ende 31 der Hubspindel 43 ist an der Stelle 37 mit dem Hebel 35 verbunden. Die ebenfalls zwangsläufige Zurückverschwenkung der Rollen 20 und 25 von der Position B in die Position A erfolgt, nachdem der letzte Auswalzvorgang durch die Lichtschranke erfasst wurde und rechtzeitig bevor das Teigband bei der Haspel 18 zum Aufwickeln eintrifft.

Das auf dem Förderband 7 befindliche, ausgewalzte Teigband gelangt auf das Förderband 19 und wird auf der Haspel 18 aufgewickelt, wobei das Förderband 27 dafür sorgt, dass das aufzuwickelnde Teigband richtig an der Haspel 18 anliegt. Nach einer einstellbaren Umdrehzahl der Teighaspel 18 werden die Umlenkrolle 20 mit einem Teil des Förderbandes 19 sowie die Andrückrolle 25 von der Position A in die Position B verschwenkt. Die Haspel wird in der Position B vom waagrecht verlaufenden Förderband 19, das dieselbe, resp. die äusserste Teigwicklung beführt, in Umdrehung gehalten. Durch das Verschwenken der Rollen 20 und 25 von der Position A in die Position B wird bewirkt, dass der Aufwickelvorgang durch den wachsenden Durchmesser des aufgewickelten Teigbandes nicht beeinträchtigt wird.

In der Fig. 3 ist die Ansicht der Teigband-Aufhaspelvorrichtung dargestellt, wenn sich der Schwenksupport 23 und damit die Rollen 20 und 25 in der Ruhelage B befinden.

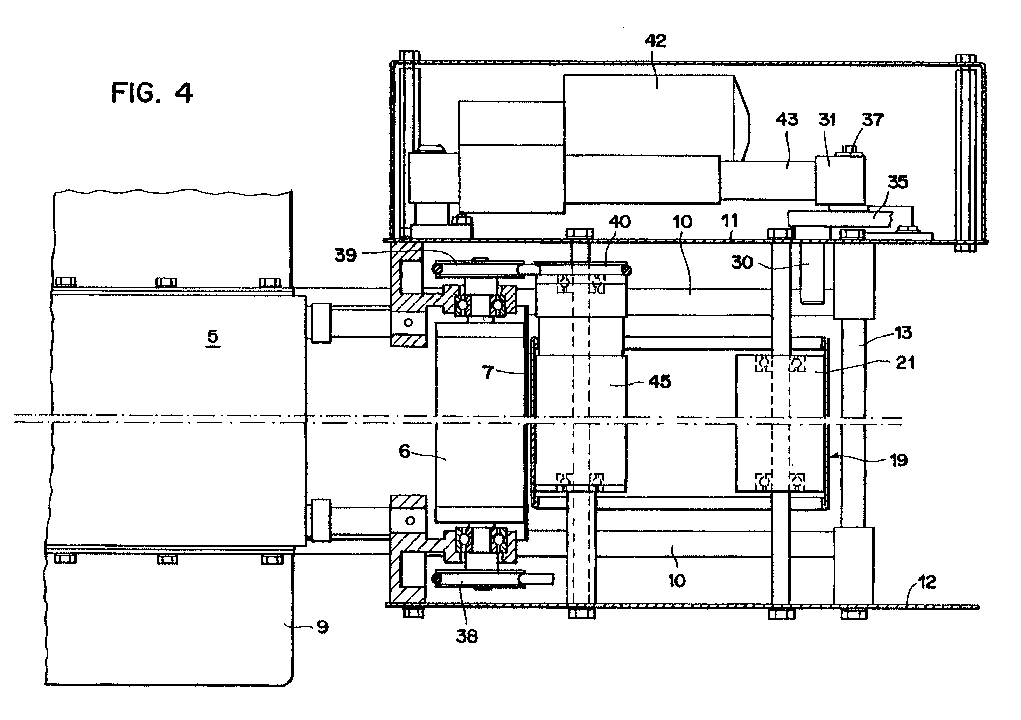

In der Fig. 4 ist ein Schnitt gemäss Linie IV-IV der Fig. 2 dargestellt. Die Rolle 6 am Ende des Förderbandes 7 trägt auf ihrer Achse Antriebsräder 38, 39. Das Antriebsrad 39 ist mit einem mit der Rolle 45 verbundenen Antriebsrad 40 verbunden. An der Seitenplatte 11 ist der Spindelmotor 42 montiert. Mit der Hubspindel 43 des Spindelmotors 42 wird der mit der Achse 30 verbundene Hebel 35 und damit der Schwenksupport 23 verschwenkt.

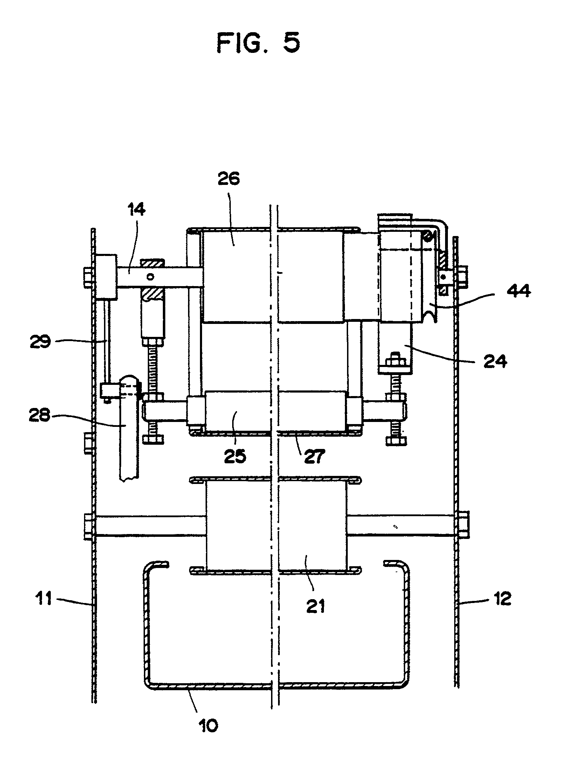

In Fig. 5 ist ein Schnitt gemäss Linie V-V der Fig. 2 dargestellt. Aus dieser Figur ist insbesondere die Anordnung des Förderbandes 27 sowie dessen Antrieb durch die Antriebsrolle 26 und der Umlenk- resp. Andrückrolle 25 ersichtlich. Die Antriebsrolle 26 wird durch ein mit ihr verbundenes Antriebsrad 44 vom Antriebsrad 38 aus angetrieben.

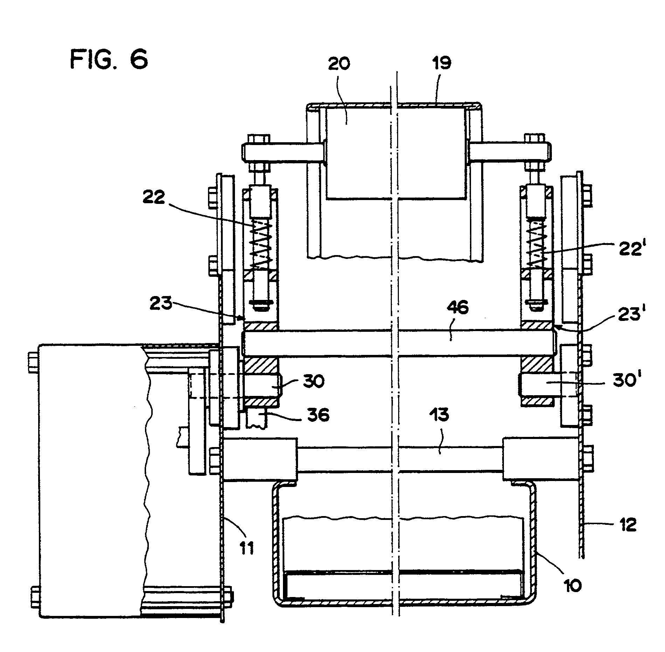

Aus Fig. 6 ist ein Schnitt gemäss Linie VI-VI der Fig. 2 ersichtlich. Die beiden symmetrischen Teile des Schwenksupports 23 sind durch eine Stange 46 miteinander verbunden.

Aus Fig. 7 ist der Aufrollvorgang auf die Haspel 18 eines dicken Teigbandes 47, beispielsweise mit einer Dicke von 10 mm, ersichtlich.

Beim letzten Durchgang des ausgewalzten Teigbandes durch die Auswalzwalzen wird eine Lichtschranke betätigt, wobei dann im Falle der gemäss Fig. 7 beschriebenen maximalen Teigdicke etwa 4 Sek. verstreichen, bis der Schwenksupport 23 durch den Spindelmotor 42 verschwenkt wird.

In Fig. 8 ist der Aufhaspelvorgang eines Teigbandes 48 mit einer Teigdicke von ca. 1 mm dargestellt.

Beim letzten Durchgang des Teigbandes durch die Auswalzwalzen wird eine Lichtschranke betätigt, wobei im gemäss dieser Fig. 8 beschriebenen Falle einer minimalen Teigdicke ca. 5 Sek. verstreichen, bis dass der Schwenksupport 23 von der Lage A in die Lage B verschwenkt wird.

Neu bei der anhand der Figuren beschriebenen erfindungsgemässen Anordnung ist u. a., dass die Umlenkrolle 20 beim Aufwickeln des Teiges etwa nach einer Umdrehung der Haspel 18 kontinuierlich linear von der Bereitsschaftsstellung A in die Ruhelage B läuft. Für sehr dicke Teige ist es sehr wichtig, dass nach etwa einer Umdrehung der Haspel 18 die Rollen 20 und 25 von der Position A in die Position B verschwenkt werden. Bei der Verwendung von dünnem Teig können bis zur Verschwenkung mehrere Lagen auf die Haspel 18 aufgewickelt sein.

Je dünner der Teig ausgewalzt wird, umso mehr Spannungen baut er auf und läuft immer langsamer auf das Förderband 7 aus. Das heisst, dass ein dicker Teig eher zu der Teighaspel 18 gelangt. Mithilfe der im Bereich der Teigwalzen 2 befindlichen Lichtschranke sowie der Steuerelektronik zum Betätigen des Spindelmotors 42 wird der Zeitpunkt des Umklappens der Rollen 20 und 25 von der Position A in die Position B optimiert.

Die Umklappbarkeit der Umlenkrolle 20 mit dem Förderband 19 in die Ruhelage B weist auch den Vorteil auf, dass beim Auswalzen das auf dem Förderband 7 befindliche Teigband unter der Teighaspel 18 unbehindert auf einen sich hinter der Teigband-Aufhaspelvorrichtung 8 befindlichen Tisch auslaufen kann.

**Patentansprüche**

1. Verfahren zum Aufhaspeln eines Teigbandes auf eine Teigband-Haspel, wobei nach dem letzten Auswalzdurchgang des Teigbandes zwischen den Teigwalzen (2) dieser Durchgang von einem Abtastmittel erfasst wird, und das Teigband anschliessend durch einen Förderer (4) einem Förderband (19) einer Teigband-Aufhaspelvorrichtung zugeführt und auf einer Teighaspel (18) aufgewickelt wird, wobei nach dem Erfassen des letzten Auswalzdurchganges des Teigbandes durch die Abtastmittel eine mit einem Schwenksupport (23) verbundene Umlenkrolle (20) automatisch von einer Ruhelage (B) in eine Bereitschaftslage (A) verschwenkt wird, und nach einer einstellbaren Verzögerungszeit, die beim Erfassen des letzten Auswalzdurchganges durch die Abtastmittel zu laufen beginnt, die mit dem Schwenksupport (23) verbundene Umlenkrolle (20) automatisch von der Bereitschaftslage (A) in die Ruhelage (B) verschwenkt wird, wobei in der Bereitschaftslage (A) das Förderband (19) das Teigband an die Teighaspel (18) andrückt.

2. Verfahren nach Patentanspruch 1, dadurch gekennzeichnet, dass zwangsläufig mit der Verschwenkung der Umlenkrolle (20) auch eine Andrückrolle (25) mit einem um diese laufenden Band (27) von einer Bereitschaftslage (A), in welcher das Band (27) an der Haspel (18) anliegt, in eine von der Haspel (18) entfernte Ruhelage (B) verschwenkt wird und zwangsläufig mit der Verschwenkung der Umlenkrolle (20) von der Ruhelage (B) in die Bereitschaftslage (A) ebenfalls die Andrückrolle (25) von der Ruhelage (B) in die Bereitschaftslage (A) verschwenkt wird.

3. Verfahren nach Patentanspruch 1 oder 2, dadurch gekennzeichnet, dass die beiden Lagen (A, B) des Schwenksupports (23) durch Endschalter (32, 33) erfasst werden.

4. Teigauswalzmaschine mit einer Teigband-Aufhaspelvorrichtung, wobei die Teigauswalzmaschine mit zwei dies- bzw. jenseits eines Walzenpaares (2) angeordneten, je ein Gestell (5), zwei Rollen (6) und ein Förderband (7) aufweisenden Förderern (3, 4) ausgerüstet ist, und am Gestell (5) des einen der genannten Förderer die Teigband-Aufhaspelvorrichtung (8) angebracht ist, mit einem vom einen Förderer (4) angetriebenen, zur Uebernahme eines Teigbandes bestimmten Förderband (19), dessen zumindest ein Trum (19b) an einer unterhalb einer Haspel (18) angeordneten, ortsfest gelagerten Stützrolle (21) gestützt ist, wobei das Förderband (19) ferner eine Umlenkrolle (20) umläuft, die an dem verschwenkbaren Schwenksupport (23) so angeordnet ist, dass wenn dieser in eine Bereitschaftslage (A) heraufgeschwenkt ist, der obere Trum (19a) des Förderbandes die Haspel (18) auf einem Teil des Umfanges derselben umschlingt, um das Aufhaspeln des auf dem Förderband (19) liegenden Teigbandes einzuleiten, und der Schwenksupport (23) nach einer einstellbaren Aufhaspelphase des Teigbandes auf die Haspel (18) in eine Ruhelage (B) derart verschwenkbar ist, dass das weitere Aufhaspeln des Teigbandes auf die Haspel (18) unbehindert erfolgen kann, wobei ein durch ein Band (27) verbundenes Rollenpaar mit einer Andrückrolle (25) und einer Antriebsrolle vorgesehen ist, und in der Bereitschaftslage der Umlenkrolle (20) das Band (27) an der Teighaspel (18) angeliegt, dadurch gekennzeichnet, dass der Schwenksupport (23) von einem Motor (42) verschwenkbar ist und in Wirkverbindung mit dem Rollenpaar (25, 26) steht, so dass sich das Band (27) in der Ruhelage (B) der Umlenkrolle (20) in einer von der Teighaspel (18) entfernten Ruhelage (B) der Andrückrolle befindet.

5. Teigauswalzmaschine nach Patentanspruch 4, gekennzeichnet durch die beiden Endlagen (A, B) des Schwenksupports (23) erfassende Endschalter (32, 33).

6. Teigauswalzmaschine nach Patentanspruch 4 oder 5, gekennzeichnet durch von den Abtastmitteln und den Endschaltern (32, 33) betätigbare Steuermittel, welche ihrerseits den Motor (42) in Betrieb und ausser Betrieb setzen.

7. Teigband-Aufhaspelvorrichtung für eine Teigauswalzmaschine mit einer Teighaspel (18) und einem zur Aufnahme und zum Transport des Teigbandes zur Teighaspel (18) bestimmten Förderband (19), das um eine Antriebsrolle (45), um eine Stützrolle (21) sowie um eine Umlenkrolle (20) umläuft und in einer Bereitschaftslage (A) der Umlenkrolle (20) zumindest in einem Teilbereich an der Teighaspel (18) anliegt, wobei ein mit der Umlenkrolle (20) verbundener Schwenksupport (23) von der Bereitschaftslage (A) in eine Ruhelage (B) verschwenkbar angeordnet ist, und ein durch ein Band (27) verbundenes Rollenpaar mit einer Andrückrolle (25) und einer Antriebsrolle (26) vorgesehen ist, und in dir Bereitschaftslage der Umlenkrolle (20) das Band (27) an der Teighaspel (18) anliegt, dadurch gekennzeichnet, dass der Schwenksupport (23) von einem Motor (42) verschwenkbar ist und in Wirkberbindung mit dem Rollenpaar (25, 26) steht, so dass sich das Band in der Ruhelage (B) der Umlenkrolle (20) in einer von der Teighaspel (18) entfernten Ruhelage (B) der Andrückrolle befindet.

8. Teigband-Aufhaspelvorrichtung nach Patentanspruch 7, gekennzeichnet durch zwei die beiden Endlagen des Schwenksupports (23) erfassende Endschalter (32, 33).

## Claims

1. Method of winding a sheet of dough on a dough reel, the last sheeting pass of dough between the sheeting cylinders (2) being detected by a sensor means, and the sheet of dough then being fed by means of a conveyor (4) to a conveyor belt (19) of a dough winding device and wound on a dough reel (18), a guide roll (20) connected with a swivel support (23) being automatically pivoted from a resting position (B) to a stand-by position (A) after detection by the sensor means of the last sheeting pass of the dough, and, after an adjustable time lag which begins on detection by the sensor means of the last sheeting pass, the guide roll (20) connected with the swivel support (23) is automatically pivoted from the stand-by position (A) to the resting position (B), the conveyor belt (19) pressing the sheet of dough against the dough reel (18) in the stand-by position (A).

2. Method according to claim 1, characterized in that when the guide roll (20) is pivoted, a pressing roller (25) with a belt (27) running around the latter, is constrained to pivot from a stand-by position (A), in which the belt (27) rests against the reel (18), to a resting position (B) remote from the reel (18) and when the guide roll (20) is pivoted from the resting position (B) to the stand-by position (A), the pressing roller (25) is also constrained to pivot from the resting position (B) to the stand-by position (A).

3. Method according to claim 1 or 2, characterized in that the two positions (A, B) of the swivel support (23) are detected by limit switches (32, 33).

4. A dough sheeter having a dough winding device, the dough sheeter being equipped with two conveyors (3, 4) disposed on either side of a pair of cylinders (2), each of the conveyors having a frame (5), two rollers (6) and a conveyor belt (7), the dough winding device (8) being affixed to the frame (5) of one of the said conveyors, with a conveyor belt (19) intended to receive a sheet of dough, driven by a conveyor (4), at least one belt-side (19b) of the conveyor belt being supported on a support roller (21) which is mounted stationary beneath a reel (18), the conveyor belt (19) also running over a guide roller (20) which is disposed on the pivotable swivel support (23) in such a way that when the latter is pivoted into a stand-by position (A), the upper belt-side (19a) of the conveyor belt runs over part of the circumference of the reel (18) in order to initiate winding of the sheet of dough resting on the conveyor belt (19), and the swivel support (23) being pivotable into a resting position (B) in such a way after an adjustable winding phase of the sheet of dough onto the reel (18) that the further winding of the sheet of dough onto the reel (18) can take place unhindered, a pair of rollers connected by means of a belt (27) with a pressing roller (25) and a drive roller being provided and when the guide roller (20) is in the stand-by position, the belt (27) rests against the dough reel (18), characterized in that the swivel support (23) is pivotable by a motor (42) and operatively connected with the pair of rollers (25, 26) so that when the guide roll (20) is in the resting position (B), the belt (27) is in a resting position (B) of the pressing roller remote from the dough reel (18).

5. Dough sheeter according to claim 4, characterized by the limit switches (32, 33) which detect the two limit positions (A, B) of the swivel support (23).

6. Dough sheeter according to claim 4 or 5, characterized by control means actuatable by the sensor means and the end switches (32, 33), and which for their part, start and stop the motor (42).

7. Dough winding device for a dough sheeter with a dough reel (18) and a conveyor belt (19) intended to receive and transport the sheet of dough to the dough reel (18), which runs overs a drive roller (45), a supporting roller (21) and a guide roll (20) and when the guide roll (20) is in a stand-by position (A) rests at least partly on the dough reel (18), a swivel support (23) connected with the guide roll (20) being disposed that it may be pivoted from the stand-by position (A) to a resting position (B), and a pair of rollers connected by a belt (27), a pressing roller (25) and a drive roller (26) being provided, and when the guide roll (20) is in the stand-by position, the belt (27) lies against the dough reel (18), characterized in that the swivel support (23) can be pivoted by a motor (42) and is in operative connection with the pair of rollers (25, 26), so that when the guide roll (20) is in the resting position (B), the belt is in a resting position (B) of the pressing roller remote from the dough reel (18).

8. Dough winding device according to claim 7, characterized by two limit switches (32, 33) which detect the two end positions of the swivel support (23).

## Revendications

1. Procédé pour enrouler une bande de pâte autour d'une bobine à enrouler, dans lequel, après le dernier passage de la bande de pâte entre des rouleaux lamineurs de pâte (2), ce passage est appréhendé par des moyens senseurs et la bande de pâte est juste après conduite par un convoyeur (4) sur la bande convoyeuse (19) d'un dispositif enrouleur de bandes de pâte, puis est enroulée sur une bobine à enrouler la pâte (18), un rouleau de changement de direction (20) relié à un support rabattable (23) étant, après la détection du dernier passage de laminage de la bande de pâte par les moyens senseurs, automatiquement rabattu d'une position de repos (B) à une position de préparation (A), puis, après un temps de retard réglable qui commence à être compté lors de la détection du dernier passage de laminage par les moyens senseurs, le rouleau de changement de direction (20) relié au support rabattable (23) est automatiquement rabattu de la position de préparation (A) à la position de repos (B), la bande convoyeuse (19) pressant la bande de pâte contre la bobine à enrouler la pâte (18) dans la position de préparation (A).

2. Procédé selon la revendication 1, caractérisé en ce que, d'une façon qui intervient obligatoirement avec le rabattage du rouleau de changement de direction (20), un rouleau de pressage (25) autour duquel circule une bande (27) est rabattu depuis une position de préparation (A) dans laquelle (27) il s'appuie contre la bobine (18) jusqu'à une position de repos (B) dans laquelle la bande (27) est éloignée de la bobine (18), le rouleau de pressage (25) étant également rabattu de la position de repos (B) dans la position de préparation (A) d'une façon obligatoire en même temps qu'intervient le rabattage du rouleau de changement de direction (20) de sa position de repos (B) dans sa position de préparation (A).

3. Procédé selon la revendication 1 ou la revendication 2, caractérisé en ce que les deux positions (A, B) du support rabattage (23) sont saisies par des commutateurs de fin de course (32, 33).

4. Machine à laminer la pâte comprenant un dispositif de bobinage de bandes de pâte munie de convoyeurs (3, 4) disposés de part et d'autre d'une paire de rouleaux de laminage (2), ces convoyeurs (3, 4) comportant chacun un bâti (5), deux rouleaux (6) et une bande convoyeuse (7), le dispositif de bobinage de bande de pâte (8) étant monté au bâti (5) d'un desdits convoyeurs, avec une bande convoyeuse (19), entraînée par un convoyeur (4) et destinée à reprendre une bande de pâte, au moins un brin (19b) de la bande convoyeuse étant appuyé contre un rouleau d'appui (21) non déplaçable et disposé en dessous d'une bobine (18), la bande convoyeuse (19) circulant par ailleurs autour d'un rouleau de changement de direction (20) qui est disposé sur un support rabattable (23) de telle manière que, lorsque ce support a été rabattu en position de préparation (A), le brin supérieur (19a) de la bande convoyeuse vienne entourer une portion de la circonférence de la bobine (18) pour engager le bobinage, sur la bobine, de la bande de pâte se trouvant sur la bande convoyeuse (19), le support rabattable (23) étant, après une phase réglable de bobinage de la bande de pâte sur la bobine (18), rabattable sur sa position de repos (B) de façon que le bobinage plus avant de la bande de pâte sur la bobine (18) puisse intervenir sans entrave, une paire de rouleaux reliés par une bande (27), comprenant un rouleau de pressage (25) et un rouleau d'entraînement (26) étant prévus de telle façon que, dans la position de préparation du rouleau de changement de direction (20), la bande (27) se trouve en appui contre la bobine d'enroulement de pâte (18), caractérisée en ce que le support rabattable (23) est entraîné pour son rabattement par un moteur (42) et se trouve en liaison de coopération avec la paire de rouleaux (25, 26), de façon que, dans la position de repos (B) du rouleau de changement de direction (20), la bande (27) se trouve en une position de repos (B) dans laquelle le rouleau d'appui (25) se trouve éloigné de la bobine d'enroulement de pâte (18).

5. Machine à laminer la pâte selon la revendication 4, caractérisée en ce que les deux positions extrêmes (A, B) du support rabattable (23) sont saisies par des commutateurs de fin de course (32, 33).

6. Machine à laminer la pâte selon la revendication 4 ou la revendication 5, caractérisée par des moyens de commande actionnables par les moyens senseurs et les commutateurs de fin de course (32, 33), lesquels moyens de commande mettent à leur tour le moteur (42) en service et hors service.

7. Dispositif de bobinage d'une bande de pâte pour une machine de laminage de pâte, comprenant une bobine de bobinage de pâte (18) et une bande convoyeuse (19) destinée à recevoir et transporter la bande de pâte sur la bobine d'enroulement de pâte (18), la bande convoyeuse (19) passant autour d'un rouleau d'entraînement (45), autour d'un rouleau d'appui (21) de même qu'autour d'un rouleau de changement de direction (20), cette bande convoyeuse (19) passant également, dans une position de préparation (A) du rouleau de changement de direction (20), au moins autour d'une partie d'une bobine d'enroulement de pâte (18), un support rabattable (23) lié au rouleau de changement de direction (20) étant disposé de façon rabattable d'une position de préparation (A) à une position de repos (B), et une paire de rouleaux reliés par une bande (27), comprenant un rouleau d'appui (25) et un rouleau d'entraînement (26), étant prévue de façon que, dans la position de préparation du rouleau de changement de direction (20), la bande (27) s'appuie contre la bobine d'enroulement de pâte (18), caractérisée en ce que le support rabattable (23) est commandé pour son rabattement par un moteur (42) et se trouve en liaison de coopération avec la paire de rouleaux (25, 26) de façon que, dans la position de repos (B) du rouleau de changement de direction (20), la bande autour du rouleau d'appui (25) se trouve dans une position de repos (B) éloignée de la bobine d'enroulement de pâte (18).

8. Dispositif de bobinage d'une bande de pâte selon la revendication 7, caractérisé par deux commutateurs de fin de course (32, 33) qui détectent les deux positions extrêmes du support rabattable (23).

FIG. 1

FIG. 7

FIG. 8

EP 0 303 567 B1

FIG. 2

FIG. 3

FIG. 4

EP 0 303 567 B1

# FIG. 5

FIG. 6